# EUROPEAN PATENT SPECIFICATION

(11) **EP 4 446 223 B1**
(45) Date of publication and mention of the grant of the patent: **25.02.2026**
(21) Application number: 24168545.2
(22) Date of filing: 04.04.2024
(51) Int. Cl.: B64D 11/06, B60N 3/00, A45C 3/00

(54) **TRAY TABLE WITH INTEGRATED STOWAGE POUCH FOR TRAVEL ESSENTIALS**
TABLETTTISCH MIT INTEGRIERTEM STAUBEUTEL FÜR REISEESSENZ
TABLE-PLATEAU AVEC POCHE DE RANGEMENT INTÉGRÉE POUR DES OBJETS ESSENTIELS AU VOYAGE

(30) Priority: 10.04.2023 IN 202311026606; 14.08.2023 US 202318233563
(43) Date of publication of application: 16.10.2024
(73) Proprietor: B/E Aerospace, Inc., Winston-Salem, NC 27105 (US)
(72) Inventor: PRATHIPATI, Krishna Chaitanya, Hyderabad (IN); KANDUKURI, Ravindra Ramulu, Secunderabad (IN)
(74) Representative: Dehns

(56) References cited:
- EP-B1- 0 045 236
- CN-U- 203 314 293
- US-A1- 2006 102 667
- US-A1- 2011 297 498
- US-A1- 2015 122 159
- US-A1- 2017 291 710
- US-B2- 8 936 308

## Description

### TECHNICAL FIELD AND BACKGROUND

The present disclosure relates generally to stowage solutions for passenger cabins, and more particularly, to an economy class tray table including an integrated pouch for stowing travel essentials in a conspicuous manner.

Passenger cabins suffer from a lack of stowage space, particularly in economy seating classes. In aircraft, stowage space is typically limited to overhead bins, under seat space, and literature pockets. While overhead bins and under seat space are able to accommodate larger items such as luggage, bags, coats, etc., small items stowed in these spaces tend to be forgotten and left behind when passengers deplane. As for the literature pocket, these pockets are typically formed from the dress cover or shroud material of the seat and are already tasked with holding safety card instructions and magazines. Importantly, except for a portion of taller items, most contents stowed within a literature pocket are not visible from the outside. Thus, storing smaller items in literature pockets presents the risk that such items will also be forgotten and left behind.

Therefore, what is needed is a conspicuous stowage solution for essential travel items such as smartphones, passports, wallets, boarding passes, etc. US2015/122159 A1 relates to a caddy organizer for use with an airplane tray table. US2006/102667 A1 relates to a portable activity pack for children. EP0045236B1 relates to a multifunction and utilization pouch for receiving pocket articles.

### BRIEF SUMMARY

To achieve the foregoing and other advantages, a pouch configured to be removably attached to a tray table, is provided according to claim 1. A tray table assembly comprising the pouch of claim 1 is provided as per claim 7.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 is a perspective view of a seat row including a plurality of passenger seats each including a tray table assembly according to an embodiment of the present disclosure;
FIG. 2 is a side view of two longitudinally adjacent passenger seat each including a tray table assembly according to an embodiment of the present disclosure;
FIG. 3 is a back view of a portion of one of the passenger seats of FIG. 1, showing mesh material used in the construction of the integrated pouch;
FIG. 4 is a perspective view of the pouch shown removed from the tray table;
FIG. 5 is a front view of the pouch;
FIG. 6 is a side view of the pouch; and
FIG. 7 is a top view of the pouch.

### DETAILED DESCRIPTION

Before explaining embodiments of the inventive concepts disclosed herein in detail, it is to be understood that the inventive concepts disclosed herein are not limited in their application to the details of construction and the arrangement of the components or steps or methodologies set forth in the following description or illustrated in the drawings. In the following detailed description of embodiments of the present disclosure, numerous specific details are set forth in order to provide a more thorough understanding of the inventive concepts. However, it will be apparent to one of ordinary skill in the art having the benefit of the present disclosure that the inventive concepts disclosed herein may be practiced without these specific details. In other instances, well-known features may not be described in detail to avoid unnecessarily complicating the present disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein, where applicable, a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present). In addition, use of the "a" or "an" are employed to describe elements and components of embodiments of the present inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination or sub-combination of two or more such features, along with any other features which may not necessarily be expressly described or inherently present in the present disclosure.

Broadly, the present disclosure provides a tray table assembly for a passenger seat generally including a tray table and an attached stowage pouch, and a stowage pouch configured to be removably attached to a tray table. The pouch removably attaches to the back or bottom of the tray table such that the pouch is in direct line of sight of the passenger when the tray table is in a stowed condition. At least the outer layer of the pouch is mesh, transparent, or translucent such that items stowed in the pouch (e.g., smartphone, passport, boarding pass) are conspicuous to remind the passenger to remove the items when deplaning. The pouch is dimensioned to hold smaller items, for instance items having a thin profile, that are commonly brought onboard by passengers. The pouch is constructed from soft material to satisfy impact criteria for passenger seats. The pouch includes a closeable opening such that items are secured in the pouch regardless of the position of the tray table.

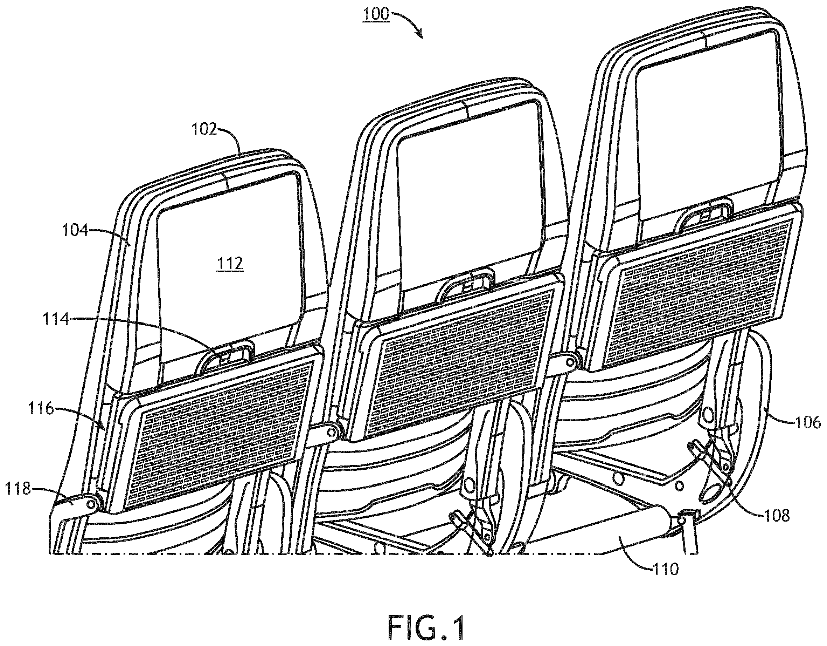

FIG. 1 illustrates a non-limiting example of a seat row 100, such as an economy class seat row found in an aircraft passenger cabin. As shown for context, the seat row 100 includes three laterally adjacent passenger seats 102. The seat row 100 may include any number of passenger seats, such 1, 2, 3...n seats. Each passenger seat 102 includes a seat back 104 supported by a seat frame 106, wherein the seat frame 106 may be shared across the seat row 100. In some embodiments, the seat frame 106 includes spreaders 108 interconnected through transverse beams 110. The details and configuration of the seat frame 106 are not critical to the inventive aspects of the present disclosure. In some embodiments, each seat back 102 is configured with a video monitor 112 positioned above a tray table latch 114.

Each seat 102 is equipped with a tray table assembly 116 as discussed further below. In some embodiments, each tray table assembly 116 is rotatably attached to a pair of supports arms 118 further attached to the seat frame 106. In use, the support arms 118 serve to coordinate the rotational movement and positioning of the tray table assembly 116 relative to the seat back 104, such that the seat back recline angle does not impact the deployed position of the tray table assembly 116. When the tray table assembly 116 is fully stowed as shown in FIG. 1, the support arms 118 align generally along the sides of the seat back 104 and the tray table assembly 116 is positioned against the back of the seat back 104. When fully deployed, the tray table assembly 116 rotates away from the seat back 104 to a substantially horizontal position. The tray table assembly 116 according to the present disclosure is compatible for use with other tray table mechanisms including, but limited to, fore, aft, and lateral translation mechanisms, tray table expansion mechanisms, portable electronic device holders, etc.

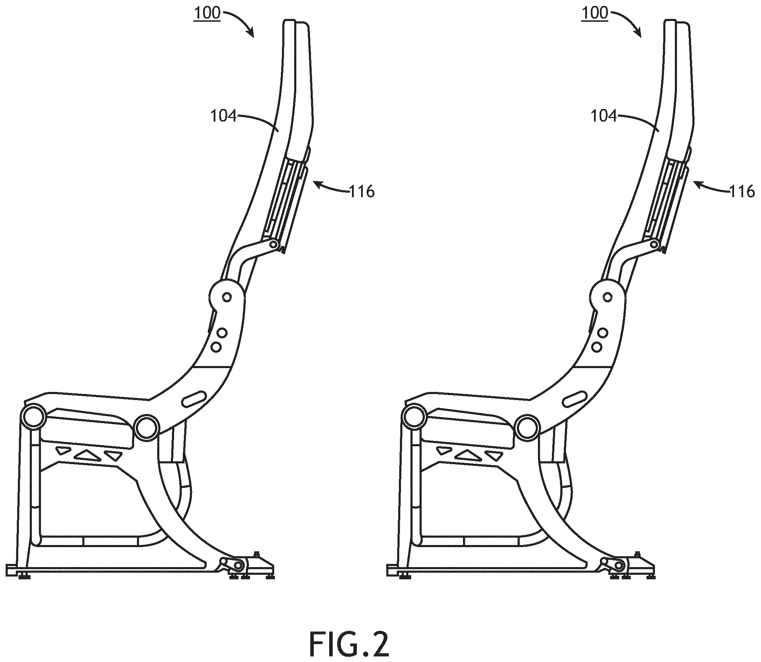

FIG. 2 illustrates a positional relationship of two seat rows 100 to show the position of the tray table assembly 116 when fully stowed. As shown, when fully stowed, the tray table assembly 116 is positioned about mid-height of the seat back 104 and is oriented substantially vertical. As such, a passenger seated in the aft seat row 100 (i.e., the right on the right) has a direct line of sight to the full front face of the tray table assembly 116. As discussed further below, this is important such that the contents stowed in the pouch 120 of the assembly are presented front and center to the passenger so that the passenger remembers to remove the contents before deplaning. When the tray table assembly 116 is deployed toward horizontal, the pouch may still remain accessible for use to the passenger although the pouch is positioned below the tray table. Considering the safety and stowage requirements for taxi, takeoff, and landing (TTOL), locating the pouch on the back or bottom of the tray table (depending on the tray table orientation) ensures that the contents within the pouch are fully visible to the passenger during the deplaning process.

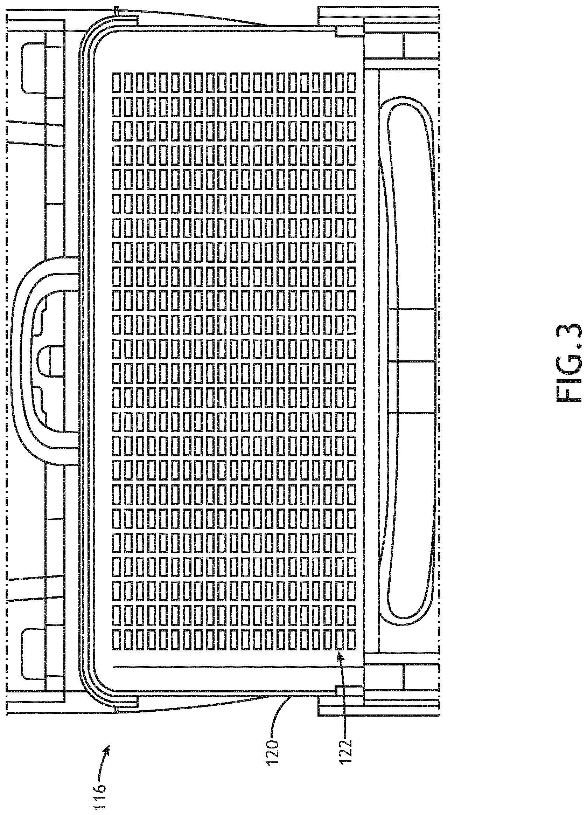

FIG. 3 illustrates the front face or facing side of the tray table assembly 116. As discussed further below, the tray table assembly 116 includes a pouch 120 removably attached or attachable to a tray table. The pouch 120 includes a first or inner layer and a second or outer layer. As shown in FIG. 3, at least the second or outer layer 122 is configured to allow the contents within the pouch to be seen through the outer layer 122. In this regard, at least the outer layer 122 may be made from mesh material, translucent material, transparent material, combinations thereof, or the like such that the contents are visible to a passenger facing the stowed tray table assembly 116. To comply with safety requirements for a passenger seat, for example head strike area safety, at least a portion of the tray table assembly 116 may be constructed from a soft material, for instance neoprene rubber.

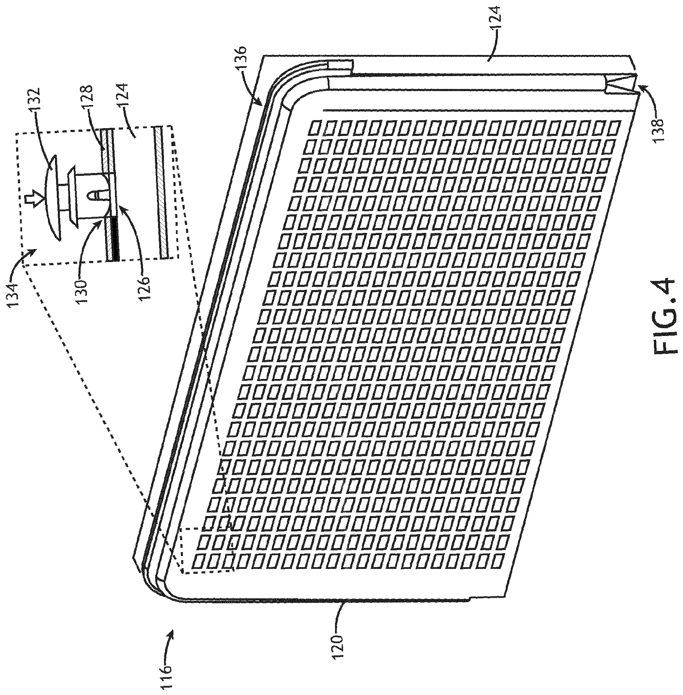

FIG. 4 illustrates the tray table assembly 116 according to a preferred embodiment of the present disclosure. The tray table assembly 116 generally includes a tray table 124 and the pouch 120 removably attached to the tray table 124. The tray table 124 may be a constructed from rigid, durable, cleanable material such as plastic and composites. When fully stowed, the tray table 124 is positioned behind the pouch 120. When fully deployed, the tray table 124 is positioned above the pouch 120.

The pouch 120 is removably attached to the tray table 124 using a plurality of removable fasteners. As shown in the detail of FIG. 4, the tray table 124 may include a plurality of openings 126 formed on the back of the tray table 124, with each opening 126 positioned proximate a corner of the tray table 124. The first or inner layer 128 of the pouch 120 includes a plurality of openings 130 formed through the inner layer 128, wherein the plurality of openings 130 formed through the inner layer 128 correspond in number and position to the plurality of openings 126 formed through the back of the tray table 124. The removable fasteners are rivets 132, for instance plastic rivets, wherein each rivet 132 is received through one of the plurality of openings 130 formed through the inner layer 128 and the corresponding one of the plurality of openings 126 formed through the back of the tray table 124. To hide the rivets 132 from view, yet make them accessible, the rivets 132 are accessed from within the interior space 134.

The tray table 124 has a front, a back, a top, a bottom, and opposing lateral sides. The tray table 124 may have any shape, for instance rectangular. The pouch 120 also has a front, a back, a top, a bottom and opposing lateral sides. In some embodiments, the tray table 124 and the pouch 120 are similar in size such that the pouch covers substantially all of the bottom of the tray table 124 to maximize stowage potential. The back of the pouch 120 is formed by the inner layer 120 which is positioned against the back of the tray table 124. The front of the pouch 120 is formed by the outer layer 122 which is positioned against the inner layer 128. The interior space is formed between the inner and outer layers 128, 122. The top of the pouch 120 is formed by a closeable opening 136. In use, the closeable opening 136 maintains the contents within the interior space 134 as the tray table 124 is rotated between stowed and deployed and during turbulent conditions. The bottom of the pouch is formed by an expandable fold 138. In use, the expandable fold 138 allows the interior space to expand depending on the amount and size of the contents. The expandable fold 138 further allows the outer layer 122 to be pulled apart from the inner layer 128 to access, insert, and remove the rivets 132.

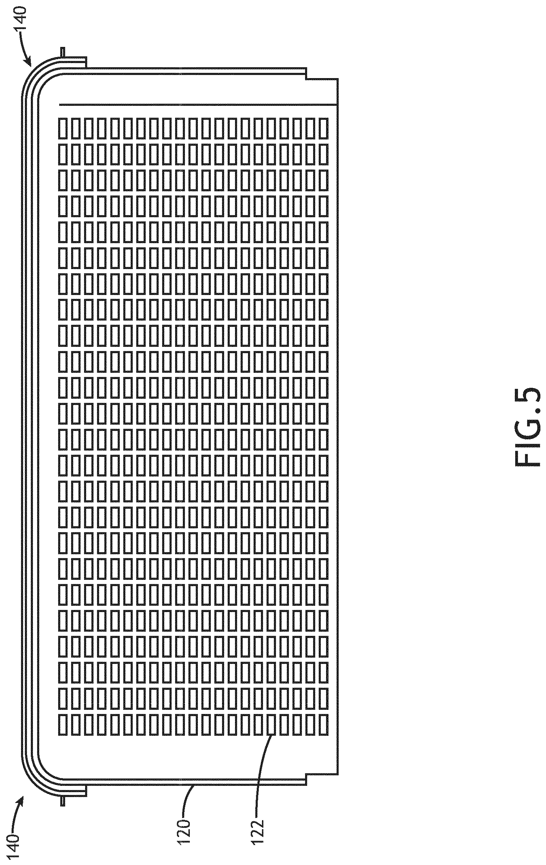

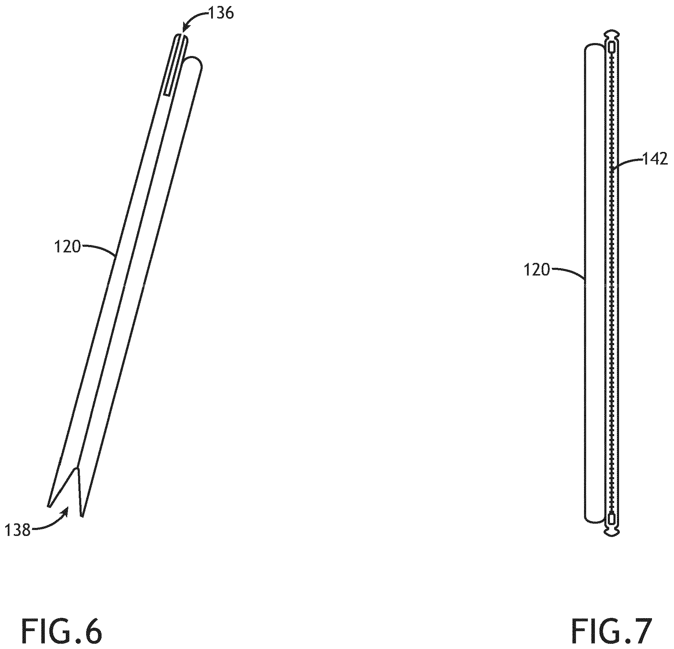

FIG. 5 illustrates a particular mesh outer layer 122 and curvature at the top of the pouch 120. In some embodiments, the top includes rounded corners 140. In some embodiments, the rounded corners 140 may be configured as corner covers configured to cover the corners of the tray table. FIGS. 6 and 7 further illustrate the shape of the pouch 120, and more particularly, the configurations of the closeable top opening 136 and the expandable fold 138. In some embodiments, the top opening may be a zippered opening 142 extending substantially the length of the top of the pouch 120.

While the foregoing description provides embodiments of the invention by way of example only, it is envisioned that other embodiments may perform similar functions and/or achieve similar results, as long as they fall within the scope of the claims.

## Claims

1. A pouch (120) configured to be removably attached to a tray table (124) having a front, a back, a top, a bottom, and opposing lateral sides, the tray table (124) configured to stow against a seat back and deploy away from the seat back, the pouch (120) comprising:
a front, a back, a top, a bottom and opposing lateral sides;
wherein:
the back of the pouch (120) is formed by a first layer configured to be positioned against the back of the tray table (124);
the front of the pouch (120) is formed by a second layer positioned against the first layer;
an interior space is formed between the first layer and the second layer;
the top of the pouch (120) is formed by a closeable opening;
the bottom of the pouch (120) is formed by an expandable fold; and wherein:
the first layer of the pouch includes a plurality of openings formed through the first layer, wherein the plurality of openings formed through the first layer correspond in number and position to a plurality of openings formed through the back of the tray table (124); and
**characterised in that**
the pouch includes a plurality of removable fasteners, wherein the plurality of removable fasteners are rivets (132), each rivet received through one of the plurality of openings formed through the first layer and configured to be received through a corresponding one of the plurality of openings formed through the back of the tray table (124);
wherein the rivets (132) are accessible from within the interior space.

2. The pouch (120) according to claim 1, wherein the second layer comprises mesh such that contents in the interior space are visible through the second layer.

3. The pouch (120) according to any of claim 1 or 2, wherein the top of the pouch (120) includes a zippered opening.

4. The pouch (120) according to any of claims 1-3, wherein the top of the pouch (120) comprises corner covers configured to be positioned over respective top corners of the tray table.

5. The pouch (120) according to any of claims 1-4, wherein the pouch is made of neoprene rubber.

6. The pouch (120) according to any of claims 1-5, wherein the second layer comprises a flexible interior portion and a rigid border.

7. A tray table assembly (116), comprising:
a tray table (124) having a front, a back, a top, a bottom, and opposing lateral sides, the tray table (124) configured to stow against a seat back and deploy away from the seat back, wherein the tray table (124) includes a plurality of openings formed on the back of the tray table (124), each opening positioned proximate a corner of the tray table (124); and
a pouch (120), as claimed in claim 1, removably attached to the back of the tray table (124) by a plurality of removable fasteners (132).

8. The tray table assembly (116) according to claim 7, wherein the second layer comprises mesh such that contents in the interior space are visible through the second layer.

9. The tray table assembly (116) according to claim 7 or 8, wherein the top of the pouch (120) includes a zippered opening.

10. The tray table assembly (116) according to any of claims 7-9, wherein the top of the pouch (120) comprises corner covers positioned over respective top corners of the tray table (124).

11. The tray table assembly (116) according to claim 1, wherein at least a portion of the pouch (120) is made of neoprene rubber.

12. The tray table assembly (116) according to any of claims 7-11, wherein the tray table (124) and the pouch (120) are substantially equally sized.

13. The tray table assembly (116) according to any of claims 7-12, wherein the second layer comprises a flexible interior portion and a rigid border; and/or
wherein the second layer is translucent or transparent such that contents in the interior space are visible through the second layer.

## Patentansprüche

1. Beutel (120), der dazu konfiguriert ist, entfernbar an einem Tabletttisch (124), der eine Vorderseite, eine Rückseite, eine Oberseite, eine Unterseite und gegenüberliegende seitliche Seiten aufweist, angebracht zu werden, wobei der Tabletttisch (124) dazu konfiguriert ist, anliegend an einer Sitzlehne zu verstauen und von der Sitzlehne weg auszufahren, wobei der Beutel (120) Folgendes umfasst:
eine Vorderseite, eine Rückseite, eine Oberseite, eine Unterseite und gegenüberliegende seitliche Seiten;
wobei:
die Rückseite des Beutels (120) durch eine erste Schicht gebildet ist, die dazu konfiguriert ist, anliegend an der Rückseite des Tabletttisches (124) positioniert zu sein;
die Vorderseite des Beutels (120) durch eine zweite Schicht gebildet ist, die anliegend an der ersten Schicht positioniert ist;
zwischen der ersten Schicht und der zweiten Schicht ein Innenraum gebildet ist;
die Oberseite des Beutels (120) durch eine verschließbare Öffnung gebildet ist;
die Unterseite des Beutels (120) durch eine ausdehnbare Falte gebildet ist; und wobei:
die erste Schicht des Beutels eine Vielzahl von Öffnungen beinhaltet, die durch die erste Schicht hindurch gebildet ist,
wobei die Vielzahl von Öffnungen, die durch die erste Schicht hindurch gebildet ist, in Anzahl und Position einer Vielzahl von Öffnungen entspricht, die durch die Rückseite des Tabletttisches (124) hindurch gebildet ist; und
**dadurch gekennzeichnet, dass**
der Beutel eine Vielzahl von entfernbaren Befestigungsmitteln beinhaltet, wobei es sich bei der Vielzahl von entfernbaren Befestigungsmitteln um Nieten (132) handelt und jede Niete durch eine der Vielzahl von Öffnungen, die durch die erste Schicht hindurch gebildet ist, aufgenommen wird und dazu konfiguriert ist, durch eine entsprechende der Vielzahl von Öffnungen, die durch die Rückseite des Tabletttisches (124) hindurch gebildet ist, aufgenommen zu werden;
wobei die Nieten (132) von innerhalb des Innenraums zugänglich sind.

2. Beutel (120) nach Anspruch 1, wobei die zweite Schicht ein Gitter umfasst, sodass der Inhalt in dem Innenraum durch die zweite Schicht hindurch sichtbar ist.

3. Beutel (120) nach einem der Ansprüche 1 oder 2, wobei die Oberseite des Beutels (120) eine Reißverschlussöffnung beinhaltet.

4. Beutel (120) nach einem der Ansprüche 1-3, wobei die Oberseite des Beutels (120) Eckabdeckungen umfasst, die dazu konfiguriert sind, über jeweilige Oberseitenecken des Tabletttisches positioniert zu werden.

5. Beutel (120) nach einem der Ansprüche 1-4, wobei der Beutel aus Neoprengummi gefertigt ist.

6. Beutel (120) nach einem der Ansprüche 1-5, wobei die zweite Schicht einen flexiblen Innenabschnitt und einen starren Rand umfasst.

7. Tabletttischbaugruppe (116), umfassend:
ein Tabletttisch (124), der eine Vorderseite, eine Rückseite, eine Oberseite, eine Unterseite und gegenüberliegende seitliche Seiten aufweist, wobei der Tabletttisch (124) dazu konfiguriert ist, anliegend an einer Sitzlehne zu verstauen und von der Sitzlehne weg auszufahren, wobei der Tabletttisch (124) eine Vielzahl von Öffnungen beinhaltet, die an der Rückseite des Tabletttisches (124) gebildet ist, und jede Öffnung in der Nähe einer Ecke des Tabletttisches (124) positioniert ist; und
einen Beutel (120) nach Anspruch 1, der durch eine Vielzahl von entfernbaren Befestigungsmitteln (132) an der Rückseite des Tabletttisches (124) entfernbar befestigt ist.

8. Tabletttischbaugruppe (116) nach Anspruch 7, wobei die zweite Schicht ein Gitter umfasst, sodass der Inhalt in dem Innenraum durch die zweite Schicht hindurch sichtbar ist.

9. Tabletttischbaugruppe (116) nach einem der Ansprüche 7 oder 8, wobei die Oberseite des Beutels (120) eine Reißverschlussöffnung beinhaltet.

10. Tabletttischbaugruppe (116) nach einem der Ansprüche 7-9, wobei die Oberseite des Beutels (120) Eckabdeckungen umfasst, die über jeweilige Oberseitenecken des Tabletttisches (124) positioniert sind.

11. Tabletttischbaugruppe (116) nach Anspruch 1, wobei mindestens ein Abschnitt des Beutels (120) aus Neoprengummi gefertigt ist.

12. Tabletttischbaugruppe (116) nach einem der Ansprüche 7-11, wobei der Tabletttisch (124) und der Beutel (120) im Wesentlichen gleich groß sind.

13. Tabletttischbaugruppe (116) nach einem der Ansprüche 7-12, wobei die zweite Schicht einen flexiblen Innenabschnitt und einen starren Rand umfasst; und/oder
wobei die zweite Schicht lichtdurchlässig oder transparent ist, sodass der Inhalt des Innenraums durch die zweite Schicht hindurch sichtbar ist.

## Revendications

1. Poche (120) conçue pour être fixée de manière amovible à une table-plateau (124) présentant une partie avant, une partie arrière, une partie supérieure, une partie inférieure et des côtés latéraux opposés, la table-plateau (124) étant conçue pour se ranger contre un dossier de siège et se déployer à l'opposé du dossier de siège, la poche (120) comprenant :
une partie avant, une partie arrière, une partie supérieure, une partie inférieure et des côtés latéraux opposés ;
dans laquelle :
la partie arrière de la poche (120) est formée par une première couche conçue pour être positionnée contre la partie arrière de la table-plateau (124) ;
la partie avant de la poche (120) est formée par une seconde couche positionnée contre la première couche ;
un espace interne se forme entre la première couche et la seconde couche ;
la partie supérieure de la poche (120) est formée par une ouverture refermable ;
la partie inférieure de la poche (120) est formée par un pli extensible ; et dans laquelle :
la première couche de la poche comporte une pluralité d'ouvertures formées à travers la première couche, dans laquelle la pluralité d'ouvertures formées à travers la première couche correspondent en nombre et en position à une pluralité d'ouvertures formées à travers la partie arrière de la table-plateau (124) ; et
**caractérisée en ce que**
la poche comporte une pluralité de fixations amovibles, dans laquelle la pluralité de fixations amovibles sont des rivets (132), chaque rivet étant reçu à travers l'une de la pluralité d'ouvertures formées à travers la première couche et conçu pour être reçu à travers une ouverture correspondante de la pluralité d'ouvertures formées à travers la partie arrière de la table-plateau (124) ;
dans laquelle les rivets (132) sont accessibles à partir d'un intérieur de l'espace interne.

2. Poche (120) selon la revendication 1, dans laquelle la seconde couche comprend une maille de sorte que des contenus dans l'espace interne soient visibles à travers la seconde couche.

3. Poche (120) selon l'une quelconque des revendications 1 ou 2, dans laquelle la partie supérieure de la poche (120) comporte une ouverture zippée.

4. Poche (120) selon l'une quelconque des revendications 1 à 3, dans laquelle la partie supérieure de la poche (120) comprend des couvercles d'angle conçus pour être positionnés sur des coins supérieurs respectifs de la table-plateau.

5. Poche (120) selon l'une quelconque des revendications 1 à 4, dans laquelle la poche est faite de caoutchouc néoprène.

6. Poche (120) selon l'une quelconque des revendications 1 à 5, dans laquelle la seconde couche comprend une partie interne flexible et une bordure rigide.

7. Ensemble table-plateau (116), comprenant :
une table-plateau (124) présentant une partie avant, une partie arrière, une partie supérieure, une partie inférieure et des côtés latéraux opposés, la table-plateau (124) étant conçue pour se ranger contre le dossier de siège et se déployer à l'opposé du dossier de siège, dans lequel la table-plateau (124) comporte une pluralité d'ouvertures formées sur la partie arrière de la table-plateau (124), chaque ouverture étant positionnée à proximité d'un coin de la table-plateau (124) ; et
une poche (120), selon la revendication 1, fixée de manière amovible à la partie arrière de la table-plateau (124) par une pluralité de fixations amovibles (132).

8. Ensemble table-plateau (116) selon la revendication 7, dans lequel la seconde couche comprend une maille de sorte que des contenus dans l'espace interne soient visibles à travers la seconde couche.

9. Ensemble table-plateau (116) selon la revendication 7 ou 8, dans lequel la partie supérieure de la poche (120) comporte une ouverture zippée.

10. Ensemble table-plateau (116) selon l'une quelconque des revendications 7 à 9, dans lequel la partie supérieure de la poche (120) comprend des couvercles d'angle positionnés sur des coins supérieurs respectifs de la table-plateau (124).

11. Ensemble table-plateau (116) selon la revendication 1, dans lequel au moins une partie de la poche (120) est faite de caoutchouc néoprène.

12. Ensemble table-plateau (116) selon l'une quelconque des revendications 7 à 11, dans lequel la table-plateau (124) et la poche (120) sont sensiblement de taille égale.

13. Ensemble table-plateau (116) selon l'une quelconque des revendications 7 à 12, dans lequel la seconde couche comprend une partie interne flexible et une bordure rigide ; et/ou dans lequel la seconde couche est translucide ou transparente de sorte que des contenus dans l'espace interne soient visibles à travers la seconde couche.
